(19) Europäisches Patentamt
European Patent Office
Office européen des brevets

(11) **EP 3 137 426 B1**

(12) **FASCICULE DE BREVET EUROPEEN**

(45) Date de publication et mention de la délivrance du brevet:
**13.03.2019 Bulletin 2019/11**

(21) Numéro de dépôt: **15723265.3**

(22) Date de dépôt: **23.04.2015**

(51) Int Cl.:
***C03B 5/04*** *(2006.01)*          ***C03B 5/182*** *(2006.01)*
***C03B 5/23*** *(2006.01)*

(86) Numéro de dépôt international:
**PCT/FR2015/051107**

(87) Numéro de publication internationale:
**WO 2015/166172 (05.11.2015 Gazette 2015/44)**

(54) **PROCÉDÉ ET DISPOSITIF DE FUSION ET D'AFFINAGE DU VERRE**

VERFAHREN UND VORRICHTUNG ZUM SCHMELZEN UND VERFEINERN VON GLAS

METHOD AND DEVICE FOR MELTING AND REFINING GLASS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2014  FR 1453902**
**29.04.2014  FR 1453903**

(43) Date de publication de la demande:
**08.03.2017  Bulletin 2017/10**

(73) Titulaire: **Saint-Gobain Glass France**
**92400 Courbevoie (FR)**

(72) Inventeurs:
• **MARIO, Olivier**
**75017 Paris (FR)**
• **LE VERGE, Arnaud**
**75004 Paris (FR)**
• **COMBES, Jean-Marie**
**95600 Eaubonne (FR)**

(74) Mandataire: **Saint-Gobain Recherche**
**Département Propriété Industrielle**
**39 Quai Lucien Lefranc**
**93300 Aubervilliers (FR)**

(56) Documents cités:
**CN-A- 102 320 721     CN-Y- 201 250 173**
**FR-A3- 2 951 156**

• **XU SHIQING ET AL: "3D fluid flow regularity in a float glass furnace. Part 2. Circulation disorder phenomenon due to changing the iron content", GLASS TECHNOLOGY - EUROPEAN JOURNAL OF GLASS SCIENCE AND TECHNOLOGY PART A,, vol. 57, no. 2, 1 April 2016 (2016-04-01), pages 70-77, XP001596834, DOI: HTTP://DX.DOI.ORG/10.13036/1753-3546.57.2. 019 [retrieved on 2016-04-01]**

**Description**

L'invention concerne un procédé et un dispositif de fusion, d'affinage et de conditionnement de verre fondu consommant peu d'énergie et capable de délivrer un verre de haute qualité pouvant alimenter notamment une enceinte de flottage du verre pour fabriquer du verre plat.

Un dispositif de fusion et de formage de verre est composé successivement d'une zone d'enfournement, d'une zone de fusion et affinage, d'une zone de conditionnement et enfin d'une zone de formage. La zone d'enfournement sert à l'introduction des matières première dans le four. La zone de fusion est le lieu de transformation des matières premières en pâte de verre. Afin d'obtenir une qualité optimale de la pâte de verre, en terme de fusion, homogénéité et élimination des bulles, il est nécessaire d'atteindre des températures très élevées en zone fusion, grâce à de l'énergie fossile ou électrique. La zone de conditionnement sert ensuite à refroidir le verre de manière à l'amener à la température de formage, bien inférieure aux températures subies par le verre au cours de son élaboration.

Un dispositif de fabrication de verre doit mener à un verre de haute qualité, c'est-à-dire renfermant le moins d'infondus et le moins de bulles possibles, avec une haute productivité mais avec une consommation énergétique et un coût de construction les plus faibles possibles. Le coût de construction de telles installations rend difficile et lente l'innovation dans ce domaine. C'est pourquoi les présents inventeurs ont engagé une étude approfondie des mécanismes de convection au sein du verre fondu prenant place dans les bassins successifs recevant le verre afin de trouver le dimensionnement et le fonctionnement les mieux adaptés.

Le EP650934 enseigne un dispositif de fusion du verre comprenant un bassin de fusion et d'affinage à sole plate, alimentant un canal d'écoulement suffisamment peu profond pour empêcher la création d'une courroie de recirculation du verre fondu. Le bassin de fusion et d'affinage est le siège de deux boucles de circulation convective. Aucun bassin de conditionnement n'est prévu en aval de l'affinage. Aucun courant de retour du verre n'existe en aval de la zone d'affinage. Des défauts se créent nécessairement en aval de la zone d'affinage.

Le FR-A-2951156 enseigne un four de verre plat comprenant une cuve contenant un bain de verre en fusion, un corset, une sortie par laquelle est évacué le verre en fusion, une boucle de recirculation aval du verre en fusion se formant dans le bain entre une zone interne du four plus chaude et la sortie à une température moindre, cette boucle traversant le corset ; le four comporte un moyen de réglage de la largeur de passage du verre dans la boucle de recirculation aval, ce moyen de réglage étant plongé dans le bain et s'étendant verticalement sur la majeure partie de la profondeur du bain.

Le EP2168923 enseigne un dispositif de préparation de verre fondu comprenant un four de fusion et d'affinage dont la sole remonte progressivement entre une petite zone de fusion et une grande zone d'affinage par une pluralité de marches. Le verre sortant de ce four est en écoulement piston.

Le FR2299277 enseigne un dispositif de fusion et d'affinage du verre comprenant un bassin de conditionnement à l'intérieur duquel intervient un écoulement piston. Si un courant de retour vers la zone d'affinage intervient partiellement dans le bassin d'affinage, cette zone de retour est bien trop courte pour procurer un effet suffisant compte tenu de la probabilité d'apparition de défauts dans la suite du dispositif. De plus, cette zone est tellement courte qu'elle doit nécessairement contenir d'importants moyens de refroidissement avant que le verre ne pénètre dans la zone d'écoulement piston qui peut aussi être considérée comme constituant le début d'un canal.

Le US3261677 enseigne un four comprenant une zone d'affinage si peu profonde qu'aucun courant de retour ne peut y prendre place. L'absence de retour vers la zone de fusion est peu propice à la digestion des défauts. A cette endroit très peu profond, la sole est nécessairement à une température très élevée (de l'ordre de 1470°C) favorisant l'usure du réfractaire de la sole et propice à la génération de défauts dans le verre.

Le CN201250173Y enseigne un dispositif de fusion du verre comprenant un four de fusion suivi d'un corset puis d'une section de refroidissement. La sole du four comprend une marche de 250-350 mm. Un point chaud se trouve au milieu du bain de fusion. Le retour du verre est stoppé du point chaud à la section de refroidissement.

Le CN102320721 enseigne un four alimentant directement (sans braise) un canal en forme de biseau en vue de dessus. Aucun courant de retour n'intervient dans le canal. Le verre est nécessairement beaucoup trop chaud à l'entrée de ce canal. Pour refroidir suffisamment le verre dans ce canal, un soufflage très intense serait nécessaire, de sorte que le verre souffrirait d'une qualité optique dégradée. Le soufflage ΔSouff serait en effet de l'ordre de 193% si exprimé comme dans les exemples de la présente demande.

Les gradients de température dans le four se traduisent par un écoulement convectif du verre dans le four. Ainsi, une boucle ou courroie de convection prend naissance en fusion, à partir de l'enfournement, plongeant ensuite vers la sole du four jusqu'au point chaud en sole où le verre remonte vers la surface. Une seconde boucle de circulation, en aval de la première, dite boucle aval, peut se mettre en place à partir du point chaud en sole du four de fusion/affinage, remontant et circulant en surface jusqu'à la sortie du four et sortant du four pour passer par le bassin de conditionnement. Le verre dans le four est plus chaud que dans le bassin de conditionnement. Il convient que la température de sole dans le four de fusion et d'affinage soit inférieure à 1400°C. C'est grâce à une profondeur de verre suffisante dans le four de fusion et d'affinage, ladite profondeur permettant la formation de courroies de recirculation, que la température de sole peut être maintenue à moins de 1400°C.

Les termes amont et aval dans la présente demande se réfèrent bien entendu au sens d'écoulement du verre qui coule de l'amont vers l'aval.

Les termes « courroie » et « boucle » sont synonymes dans le présent contexte. La position de boucles de recirculation du verre a souvent été décrite dans les brevets de l'art antérieur mais il a été prêté très peu d'attention à leur intensité ainsi qu'à leurs interactions mutuelles. On s'est maintenant aperçu qu'une boucle de recirculation pouvait avoir un flux représentant plusieurs fois la tirée du dispositif de fusion et que la modification d'une boucle de recirculation au niveau de sa position ou de son intensité avait des répercussions sur les caractéristiques d'une boucle de recirculation voisine. Ainsi, il est apparu que les paramètres géométriques du dispositif de fabrication de verre fondu, ainsi que la conduite opérationnelle de ce dernier impactent directement sur la position et l'équilibre respectif des deux courroies, ainsi que sur leur intensité convective. Plus l'intensité d'une boucle de recirculation est importante, plus cette boucle demande en elle-même de l'énergie au four. A ces phénomènes de recirculation dans le verre fondu viennent s'ajouter ceux liés à l'évolution des bulles dans le verre, que l'on souhaite éliminer en les faisant migrer vers la surface du verre, mais qui peuvent aussi se voir résorber par le verre en zone plus froide. De plus, la concentration en agent affinant (le plus souvent un sulfate de sodium) diminue au cours de l'écoulement du verre puisqu'il est progressivement consommé, et ce d'autant plus que la température du verre est élevée. Avant d'arriver au dispositif de formage, notamment en verre plat, le verre doit être refroidi à la température idoine de transformation. C'est le rôle dédié à un bassin de conditionnement. Le bassin de conditionnement peut ne comprendre qu'un seul compartiment, mais en général, il comprend au moins deux compartiments. Le bassin de conditionnement peut donc comprendre plusieurs compartiments disposés en série les uns derrière les autres et traversés successivement par le verre. Plus généralement, le bassin de conditionnement est constitué de deux compartiments successifs que l'on appelle corset (neck ou waist en anglais) pour le premier et braise (working end en anglais) pour le second. Généralement, le four de fusion affinage débouche directement dans le corset. Généralement, le corset débouche directement dans la braise. Un corset ne comprend aucun brûleur et généralement aucun moyen de chauffage. La braise est munie d'un dispositif de soufflage d'air à la surface du verre pour amener le verre à la bonne température. Cet air soufflé dans la braise passe généralement dans le corset qui la précède ce qui contribue également au refroidissement du verre. La section de passage ainsi que la largeur de passage pour le verre diminue fortement quand on passe du four au bassin de conditionnement, lequel commence généralement par un corset, et elle s'agrandit fortement quand on passe d'un corset à une braise. La section de passage du verre est liée à la géométrie du dispositif. Ceci vaut notamment en ce qui concerne la hauteur de verre puisqu'un tel dispositif a une cuve dédiée, construite en blocs réfractaires dits « blocs de cuves », pour venir en contact avec le verre et le contenir. La hauteur de verre dans le dispositif correspond généralement à la distance entre la cote supérieure des blocs de cuve diminuée d'une garde de sécurité généralement comprise entre 30 et 130 mm, et la cote de la sole. L'homme du métier appelle l'ensemble des blocs en contact avec le verre « infrastructure ». Il appelle « superstructure » l'ensemble des matériaux disposés au-dessus de l'infrastructure. Le matériau de superstructure, venant au-dessus des blocs de cuve de l'infrastructure et n'étant pas en contact avec le verre mais avec l'atmosphère du four, est généralement de nature différente de celle des blocs de cuve de l'infrastructure. Même si le matériau utilisé pour la superstructure est identique à celui de l'infrastructure, l'homme du métier distingue immédiatement ces deux parties de la construction. La présence de blocs de cuve est caractéristique d'un matériau fait pour recevoir le verre fondu et concerne toute la longueur du dispositif, c'est-à-dire aussi bien le four que le bassin de conditionnement. Ainsi, dans le dispositif et procédé selon l'invention, la hauteur de verre (intervenant dans le calcul de la section de passage du verre) est généralement égale à la hauteur des blocs de cuve diminué de 30 à 130 mm, notamment 80 mm (milieu du domaine de 30 à 130 mm). Ainsi, la demande concerne également un dispositif dont les blocs de cuve sont tels qu'il existe une cote de la surface du verre à une distance comprise entre 30 et 130 mm sous la cote supérieure des blocs de cuve, telle que le K selon l'invention est supérieur à 3,5 et de préférence supérieur à 5,5 et de manière encore préférée supérieur à 7,5. Notamment, K peut être supérieur à 9, voire même supérieur à 10,5 , voire même supérieur 13.

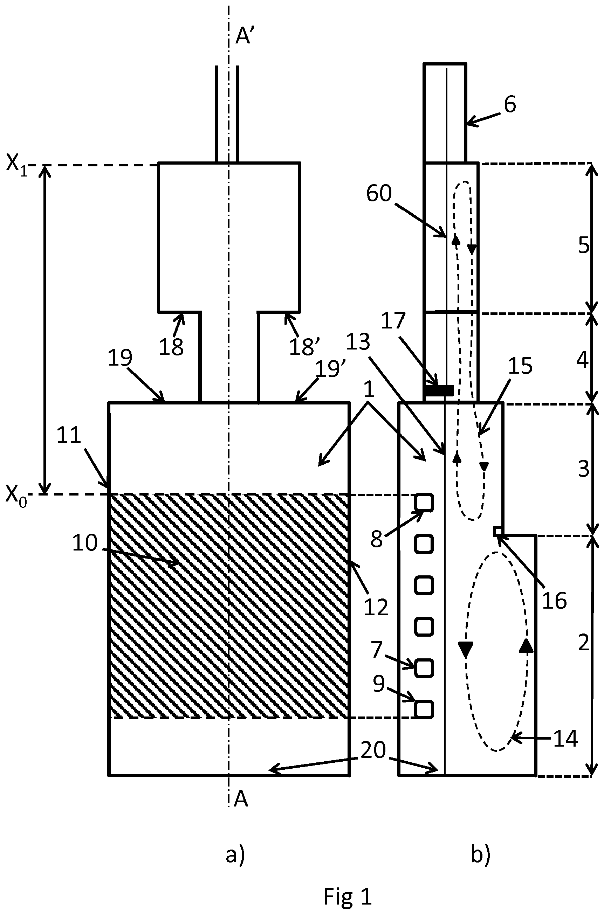

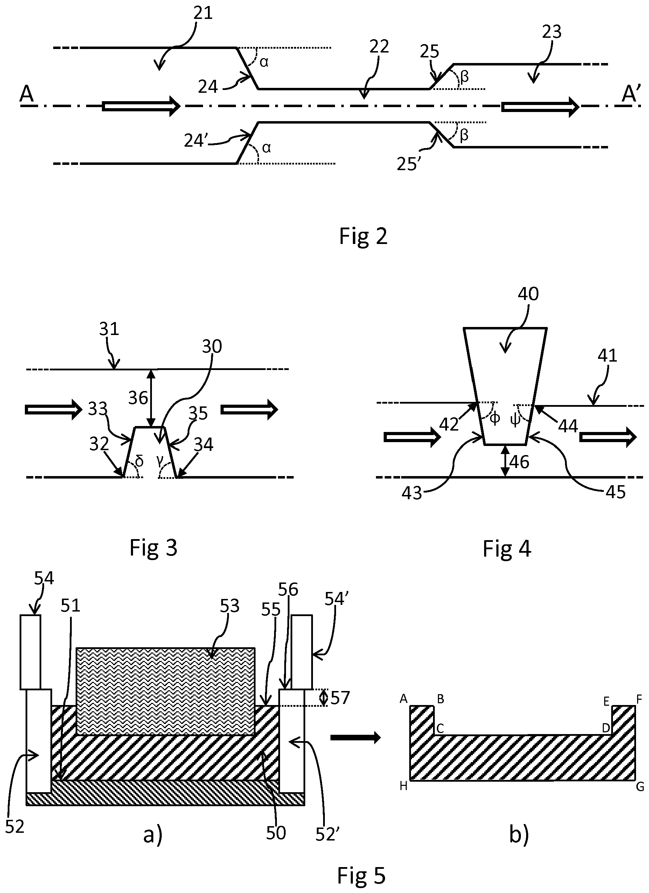

Après le bassin de conditionnement, le verre passe dans un canal qui alimente lui-même un dispositif de formage. La hauteur (ou profondeur) du verre dans le canal est bien inférieure à ce qu'elle est dans le bassin de conditionnement juste avant le canal, de sorte qu'aucune recirculation de verre n'a lieu dans le canal. C'est donc selon un écoulement piston que le verre s'écoule dans le canal. Cela n'empêche pas que le verre puisse prendre des trajectoires selon des lignes courbes dans ce canal, comme à la manière d'un enroulement, la trajectoire allant cependant toujours d'amont vers l'aval. Ce canal est avantageusement le plus court possible. En effet, les défauts éventuellement apparus dans le canal du fait du contact du verre avec les parois et la sole du canal seront inévitablement incorporés au verre passant au dispositif de formage puisque le canal est dépourvu de courant de retour. On réduit donc la probabilité d'apparition de défauts dans le canal en réduisant sa longueur. La longueur du canal est généralement comprise dans le domaine allant de 0,3 à 10 m et plus généralement dans le domaine allant de 0,8 à 6 m. La fin du canal en aval correspond à l'abscisse sur l'axe longitudinale du dispositif à laquelle le verre quitte le contact avec la sole réfractaire du canal. Dans le cas d'une enceinte de flottage pour faire du verre plat, cela correspond à l'extrémité de la lèvre de coulée pour couler le verre sur le métal fondu. Dans le cas d'un dispositif de laminage faisant passer le verre entre des rouleaux de laminage, cela correspond à l'endroit du contact du verre avec un rouleau de laminage. Le canal peut notamment correspondre à la portion 14 des figures 1 et 2 du EP650933 ou à celui des figures 1 et 2 du EP616983A1 avec ou sans ses agitateurs 15 à 18 et dont ses parties médiane 13 et 14 seraient écourtées voire même absentes. De plus, la sole du canal peut être légèrement montante vers l'aval avec une pente comprise entre 0 et 6° par rapport à l'horizontale, sans généralement que la remontée ne dépasse 100 mm.

Pour le passage du verre du four de fusion/affinage au bassin de conditionnement, ce dernier pouvant commencer par un compartiment du type corset, on a une réduction brusque de largeur du passage du verre d'au moins 30% et généralement d'au moins 50% par des parois aval du four formant un angle avec la direction d'écoulement du verre d'au moins 40° et même d'au moins 60° et généralement de 90°. Cette réduction a lieu pour les deux parois de part et d'autre de l'axe longitudinal médian du dispositif. Le bassin de conditionnement est de longueur supérieure à 2 m, et généralement de longueur supérieure à 5 mètres, selon la direction générale d'écoulement du verre, c'est-à-dire d'amont en aval sur l'axe longitudinal médian du dispositif.

En venant du four, l'entrée du bassin de conditionnement est généralement protégée par un écran thermique descendant de la voûte jusqu'au verre. Généralement, cet écran ne trempe pas dans le verre. Il sert en premier lieu à séparer l'atmosphère chaude du four de fusion/affinage de l'atmosphère froide en aval du four et commence dès le début du bassin de conditionnement. Il n'est cependant pas exclu que l'écran thermique ne trempe dans le verre.

Le bassin de conditionnement peut comprendre une braise munie d'un dispositif de soufflage du verre. Généralement, la braise est précédée d'un corset. La braise se distingue du corset qui la précède par un net élargissement de la largeur de passage pour le verre vue de dessus. Cet élargissement est généralement obtenu par des parois formant un angle de plus de 40° et généralement plus de 60° et généralement un angle à 90° avec les parois latérales du corset. Cet élargissement a lieu pour les deux parois de part et d'autre de l'axe longitudinal médian du dispositif. L'élargissement est généralement d'au moins 30% et plus généralement d'au moins 50%. Dans le cas de la transformation du verre en verre plat dans une enceinte de flottage sur un métal fondu, généralement de l'étain, il convient que le verre soit amené à une température comprise entre 1000°C et 1400°C en sortie du bassin de conditionnement, c'est-à-dire généralement en sortie de braise. Cette température peut dépendre de la composition du verre. Le soufflage de refroidissement dans une braise ne doit pas être trop intense car il pourrait créer des défauts optiques en surface du verre. C'est pourquoi, traditionnellement, l'homme du métier prévoit une large braise pour ne pas devoir trop souffler sur une petite surface de verre et risquer d'y créer des défauts optiques. Un corset est de longueur supérieure à 2 m, et généralement de longueur supérieure à 4 mètres, selon la direction générale d'écoulement du verre, c'est-à-dire selon l'axe longitudinal médian du dispositif. Une braise est de longueur supérieure à 2 m, et généralement de longueur supérieure à 5 mètres, selon la direction générale d'écoulement du verre, c'est-à-dire selon l'axe longitudinal médian du dispositif.

Dans le cadre de la présente demande, on appelle « surface de verre » ou « surface du verre », la surface supérieure du verre en contact avec l'atmosphère du four ou du dispositif de conditionnement selon le cas. Tous les phénomènes de convection du verre fondu dans un dispositif de fabrication de verre fondu sont liés à l'évolution de la température dans ledit dispositif de l'amont vers l'aval, ce qui inclut la zone de fusion, la zone d'affinage, le bassin de conditionnement, ainsi qu'à la géométrie de ses différents éléments. La zone de fusion est la zone la plus en amont du four et comprend au moins le premier brûleur en amont du four. La zone d'affinage est la zone plus en aval du four, en amont du bassin de conditionnement. Un tel dispositif est un système particulièrement complexe et difficilement prévisible. On cherche en effet à combiner les avantages suivants :

a) haute qualité de verre ; on assure une haute qualité de verre en cherchant à ce que le verre passe le plus longtemps possible à une plus haute température ; on a ainsi plus de chance de fondre les particules difficiles à fondre, et de plus, une plus haute température est favorable à l'élimination des bulles ;

b) faible consommation ; la consommation vient du chauffage nécessaire à apporter au dispositif mais aussi au refroidissement nécessaire à apporter au verre fondu dans le bassin de conditionnement, notamment la braise, pour amener le verre à sa température idoine de transformation.

Ces objectifs sont difficiles à concilier puisque le critère a) exige de fortes températures et de fortes intensités convectives faisant repasser une bonne partie du verre de l'aval vers l'amont dans un courant de retour, le verre en aval étant déjà relativement refroidi, alors que le critère b) va dans le sens de chauffer le moins possible et d'avoir le moins besoin possible de refroidir. Outre ce compromis de propriétés à trouver, on cherche également le plus faible coût de construction possible, ce qui implique les plus faibles surfaces de parois, de sole et de voûte possible pour les différents éléments du dispositif de préparation du verre, et notamment en ce qui concerne le bassin de conditionnement et plus particulièrement une braise. En effet, selon l'art antérieur, il peut arriver que la braise ait une taille voisine de celle du four.

L'invention concerne en premier lieu un procédé de préparation de verre fondu par un dispositif de préparation de verre fondu comprenant, d'amont en aval, un four de fusion et d'affinage puis un bassin de conditionnement. L'invention concerne également un dispositif de préparation de verre fondu comprenant, d'amont en aval, un four de fusion et d'affinage puis un bassin de conditionnement. Le four est muni de brûleurs aériens transversaux, chaque brûleur comprenant une arrivée de comburant et une arrivée de carburant. Le four est généralement équipé d'au moins 2 brûleurs transversaux dans chaque paroi latérale et compte généralement 3 à 10 brûleurs transversaux dans chaque paroi latérale. Chaque brûleur transversal du four a généralement une puissance allant de 2 à 12 mégawatts. Les parois latérales, généralement parallèles entre elles, sont généralement distantes l'une de l'autre de 7 à 16 mètres.

Le comburant peut être riche en oxygène, voire être de l'oxygène pur (comburant contenant 80 à 100% en volume d'$O_2$), ou basé sur l'air (comburant contenant 10 à 30% en volume d'$O_2$) comme de l'air, ou de l'air enrichi en oxygène, ou de l'air appauvri en oxygène, notamment de l'air dilué par de la fumée de combustion. Les brûleurs transversaux sont insérés dans les parois latérales (également appelées « piédroits ») du four de fusion/affinage. Pour le cas où le comburant est basé sur l'air (comburant comprenant 10 à 30% en volume d'$O_2$), des paires de brûleurs dans les parois latérales du four se font face et fonctionnent en inversion de manière connue de l'homme du métier.

Pour le cas où le comburant alimentant les brûleurs transversaux est l'oxygène pur, des brûleurs sont disposés soit face à face, soit en quinconce. Dans ce cas il n'y a généralement pas de régénérateur pour chauffer l'oxygène pur avant son injection dans le four.

Les matières premières vitrifiables sont introduites en amont dans le four de fusion pour passer sous les flammes des brûleurs transversaux.

Pour déterminer les dimensionnements adaptés du procédé et du dispositif selon l'invention, on a réalisé un important travail de modélisation des phénomènes de convection et de transferts thermiques.

Ainsi, l'invention concerne en premier lieu un procédé de fabrication de verre fondu par un dispositif de fabrication de verre fondu comprenant d'amont en aval un four de fusion et d'affinage de verre muni de brûleurs aériens transversaux, et un bassin de conditionnement alimenté directement par ledit four. Le bassin de conditionnement mène le verre à un canal d'alimentation d'un dispositif de formage. Le dimensionnement du dispositif de fabrication est tel que K est supérieur à 3,5 avec

$$K = K_a + \sum_i K_{S_i} \tag{1}$$

dans laquelle

$$K_a = 0,000727 \times S_f \times \int_{x_0}^{x_1} \frac{[P(x)]^2}{[\sigma(x)]^3} \, dx \tag{2}$$

dans laquelle

$S_f$ représente la surface sous flamme dans le four de fusion/affinage;
$x_0$ est l'abscisse sur la direction générale d'écoulement du verre de la fin de la surface sous flamme dans le four ;
$x_1$ est l'abscisse sur la direction générale d'écoulement du verre de la fin du bassin de conditionnement ;
$\sigma(x)$ représente l'aire de la section de passage du verre du dispositif à l'abscisse x;
$P(x)$ représente le périmètre de la section de passage du verre du dispositif à l'abscisse x;

et
et
$\sum_i K_{S_i}$ représente la somme des $K_{S_i}$ imputables à un élément singulier dans le dispositif en aval de la surface sous flamme dans le four, un élément singulier produisant, d'amont en aval et sur moins de 2 mètres selon la direction d'écoulement du verre, une diminution de section de passage du verre de plus de 10% puis une augmentation de section de passage du verre de plus de 10%, avec

$$K_{S_i} = 0,0012 \times \left( exp\left[ 5,16 \left( \frac{\sigma_i - \sigma_{S_i}}{\sigma_i} \right)^{2,55} \right] - 1 \right) \left( \frac{S_f}{\sigma_i} \right)^2 \tag{3}$$

$\sigma_i$ représentant l'aire de la section de passage du verre juste en amont de l'élément singulier $S_i$,
$\sigma_{S_i}$ représentant l'aire de la section minimale de passage produite par l'élément singulier $S_i$.

L'invention concerne également le dispositif de la revendication 16.

Dans toutes les formules, les unités sont celles du système international. Les sections de passage du verre sont prises dans des plans orthogonaux à la direction générale d'écoulement du verre.

De préférence, K est supérieur à 5,5 et de manière encore préférée supérieur à 7,5 et de manière encore préférée supérieur à 9, voire même supérieur à 10,5 , voire même supérieur 13. Généralement, K est inférieur à 30.

Une forte valeur de K traduit une plus intense boucle amont de recirculation dans le four de fusion/affinage et une moins intense boucle aval dans le bassin de conditionnement.

Un élément singulier vient en saillie dans le flux de verre, comme par exemple une marche posée sur la sole ou un barrage plongeant dans le verre. Cet élément singulier produit une section minimale de passage pour le verre.

Les valeurs d'abscisse sont croissantes dans le sens de l'amont vers l'aval.

Les éléments singuliers sont aussi pris en compte dans la formule (2) puisqu'ils procurent une variation de hauteur ou de largeur de passage pour le verre, et donc une variation de section de passage du verre et du périmètre de la section de passage. Généralement, toute section de passage pour le verre a une forme de carré ou rectangle dans le dispositif ou procédé selon l'invention, y compris au niveau d'un élément singulier. En effet, un élément singulier vient en saillie dans le verre par la sole ou par l'une ou par les deux parois latérales, ou par le dessus, et ce pour l'intégralité du ou des côtés du carré ou rectangle formant section de passage du verre et par lequel l'élément singulier vient en saillie. Cependant, on n'exclut pas que la section de passage puisse avoir une forme plus complexe,

La surface sous flamme $S_f$ dans le four de fusion/affinage est une notion bien connue de l'homme du métier. On la prend égale à la surface continue de verre sous le plus petit quadrilatère couvrant les limites extérieures des arrivées de comburant des brûleurs aériens transversaux ou non-transversaux en position extrême dans le four de fusion/affinage, le côté amont de ce quadrilatère étant parallèle à la paroi amont du four et formant un segment allant d'une paroi latérale à l'autre paroi latérale, le côté aval de ce quadrilatère étant également parallèle à la paroi amont du four et formant un segment allant d'une paroi latérale à l'autre paroi latérale. L'abscisse $x_0$ de la formule (2) correspond au côté aval du quadrilatère de la surface sous flamme. Ce quadrilatère à généralement deux de ses côtés se superposant aux parois latérales du four. Généralement, les parois latérales du four sont parallèles et orthogonales à la paroi amont, et ce quadrilatère est dans ce cas un carré ou un rectangle. Le four peut ne comprendre que des brûleurs aériens transversaux. Cependant, en plus de brûleurs aériens transversaux, le four peut comprendre au moins un brûleur à oxygène, notamment en voûte ou transversal. C'est aussi un brûleur aérien puisque sa flamme est créée dans l'atmosphère du four. Un tel brûleur à oxygène peut agrandir la surface sous flamme à prendre en compte dans les formules (2) et (3) s'il est placé en dehors de la surface sous flamme des arrivées de comburant des brûleurs aériens transversaux. On prend pour $S_f$ la surface de verre sous le plus petit quadrilatère comme précédemment défini et couvrant les limites extérieures des arrivés de comburant de tous les brûleurs aériens, y compris celles de ces brûleurs à oxygène.

La présence d'un élément singulier comme une marche ou un barrage, fait que la section de passage diminue d'abord et augmente ensuite dans le sens d'écoulement du verre, et ce, sur une distance de moins de 2 mètres dans la direction générale d'écoulement du verre (c'est-à-dire selon l'axe longitudinal médian du dispositif). Un élément singulier peut par exemple être constitué par une marche fixée sur la sole du four. Il peut aussi s'agir d'un barrage métallique refroidi à l'eau, maintenu par la superstructure et introduit par le côté, ledit barrage trempant dans le verre pour réduire la section de passage du verre. Quand le verre rencontre la marche ou le barrage, la section de verre diminue fortement. Quand le verre dépasse la marche ou le barrage, la section de verre s'agrandie. Du fait de l'élément singulier, la section de passage pour le verre diminue donc d'abord pour s'agrandir ensuite, d'amont en aval. L'élément singulier peut également provenir de cloisons ou d'un portillon disposés sur les parois latérales du dispositif.

A un élément singulier correspond un $K_{si}$. Pour savoir si on est en présence d'un élément singulier, il convient de mesurer la variation de section amont et la variation de section aval, produites successivement par ledit élément singulier. La variation de section amont s'apprécie par mesure de la différence de section entre la section juste en amont de l'élément singulier (dite section amont de l'élément singulier) et la section minimale $\sigma_{S_i}$ due à l'élément singulier, par rapport à la section juste en amont de l'élément singulier. La variation de section aval s'apprécie par mesure de la différence de section entre la section juste en aval de l'élément singulier (dite section aval de l'élément singulier) et la section minimale $\sigma_{S_i}$ due à l'élément singulier, par rapport à la section minimale due à l'élément singulier. Si ces deux variations sont toutes deux supérieures à 10%, on est en présence d'un élément singulier dont le $K_{S_i}$ est à calculer pour entrer dans le calcul du K du dispositif.

Le début d'un élément singulier dans le sens d'écoulement du verre se trouve à l'endroit où ledit élément commence à réduire la section de passage du verre par une paroi formant un angle avec la direction générale d'écoulement du verre supérieur à 40° (angle à l'intérieur de l'élément singulier). Généralement, cet angle est de 90°. La fin d'un élément singulier dans le sens d'écoulement du verre se trouve à l'endroit où il finit d'augmenter la section de passage du verre par une paroi formant un angle supérieur à 40° (angle à l'intérieur de l'élément singulier) avec la direction d'écoulement générale du verre. Généralement, cet angle est de 90°. La distance entre le début de l'élément singulier et la fin de l'élément singulier est inférieure à 2 mètres selon l'axe longitudinal médian du dispositif pour que l'on puisse considérer que l'on est en présence d'un élément singulier.

L'influence du dimensionnement du dispositif est appréciée sur le plan de la qualité Q, de la consommation et de la possibilité d'utiliser un petit bassin de conditionnement, notamment une petite braise. Le facteur K tel que décrit plus haut prend en compte les paramètres essentiels permettant de dimensionner un dispositif ou procédé selon l'invention à faible consommation énergétique tout en conservant une excellente qualité de verre. Le facteur K aide à déterminer les dispositifs acceptant un petit bassin de conditionnement. Selon l'invention, K est supérieur à 3,5 et de préférence supérieur à 5,5 et de manière encore préférée supérieur à 7,5.

Les écoulements de verre dans un dispositif de fabrication de verre fondu ont été modélisés numériquement à l'aide d'un logiciel commercial d'hydrodynamique. En fonction de la géométrie du dispositif, le logiciel recherche le flux énergétique à imposer sur la surface libre du verre, de manière à ce que la température maximale en surface du verre soit égale à 1590°C dans le four de fusion/affinage, et que la température du verre en sortie de la braise soit égale à 1130°C. Le verre considéré est un verre sodo-calcique standard, avec une teneur massique en $Fe_2O_3$ de 700 ppm et une teneur massique en FeO de 180 ppm. Les pertes thermiques au niveau de la cuve et de la sole sont standard (4 kW/m$^2$). Des essais réalisés sur des dispositifs de fusion réels confirment la pertinence du facteur K selon l'invention.

La qualité Q était déterminée de la façon suivante. L'homme du métier sait que la qualité d'une pâte de verre est améliorée en lui laissant plus de temps à des températures élevées, et plus précisément, au-delà des températures auxquelles l'affinage chimique du verre se produit. A partir des écoulements issus de la modélisation numérique, un suivi de 100000 particules depuis la paroi amont du four est réalisé. Le critère de qualité Q considéré est le temps de séjour moyen au-delà de 1400°C, et ce, en relatif par rapport à un cas de référence.

La consommation était déterminée de la façon suivante : il s'agit de la quantité d'énergie rentrant dans le verre au niveau de sa surface libre dans le four de fusion/affinage, pour que la température maximale en surface du verre soit égale à 1590°C dans le four de fusion/affinage, et que la température du verre en sortie du bassin de conditionnement soit égale à 1130°C, additionnée à l'énergie pour fondre les matières premières jusqu'à leur transformation en phase liquide, et ce, en relatif par rapport à un cas de référence (exemple n°1 dans le tableau 1). La possibilité d'utiliser un petit bassin de conditionnement et notamment une petite braise était déterminée en regardant l'influence de la taille du bassin de conditionnement sur la qualité Q et la consommation, mais aussi sur l'énergie de soufflage nécessaire au refroidissement. Pouvoir installer une petite braise est très avantageux car cela nécessite moins de matériaux de construction et revient donc moins cher. De plus, la surface de contact de matériau de construction avec le verre est moins importante dans le cas d'un petit bassin de conditionnement, ce qui réduit le risque de la création de défauts dans le verre.

Selon l'invention, on a découvert que la taille du bassin de conditionnement, notamment d'une braise, pouvait être énormément réduite du fait notamment de la relative basse intensité de la courroie de convection aval, ce qui revient à avoir moins de verre à conditionner, et ce qui se traduit par une valeur de K appropriée.

Selon l'invention, la sole du compartiment d'affinage et la sole du bassin de conditionnement sont suffisamment profondes pour qu'une même boucle de recirculation (dite boucle aval) passe par ces deux éléments. Cette boucle passe par tous les compartiments du bassin de conditionnement, notamment, généralement un corset suivi d'une braise. De préférence, cette boucle aval va jusqu'à l'extrémité du bassin de conditionnement, généralement une braise, c'est-à-dire jusqu'au canal, sans rentrer dans le canal. L'existence de cette boucle de recirculation est essentielle tout en restant d'intensité modérée. On s'est en effet aperçu que le courant retour de cette boucle contenait l'essentiel des défauts issus de la zone d'affinage ainsi que ceux générés dans le bassin de conditionnement et que leur renvoi en zone d'affinage du four permettait généralement de les faire disparaître. L'homme du métier est persuadé qu'un grand bassin de conditionnement, notamment une grande braise, est nécessaire afin de laisser le temps au verre de reposer suffisamment pour que les bulles aient le temps de s'échapper et que le verre puisse refroidir jusqu'à la température nécessaire à sa transformation. On a au contraire découvert qu'il valait mieux avoir un petit bassin de conditionnement, notamment une petite braise, éventuellement soumise à un refroidissement un peu plus fort, car la surface de matériau en contact avec le verre était ainsi minimisée et était à l'origine de moins de défauts. La faible dimension du bassin de conditionnement est aussi rendue possible grâce à la basse intensité de la boucle de recirculation qui le traverse. En effet, cette basse intensité a pour conséquence que la courroie de recirculation ramène moins de chaleur du four vers le bassin de conditionnement, lequel nécessite de ce fait un refroidissement plus modéré. De préférence, la boucle de recirculation traversant le bassin de conditionnement va jusqu'au canal sans passer dans le canal. Selon cette possibilité, la boucle de recirculation aval va jusqu'à l'abscisse $x_1$, laquelle peut correspondre à l'extrémité aval d'une braise. Ceci signifie que dans tout plan vertical transversal à l'axe longitudinal du four dans le bassin de conditionnement, il existe des points dans le verre ayant une composante de vitesse longitudinale négative, c'est-à-dire allant de l'aval vers l'amont. De tels points font partie d'un courant de retour. On considère qu'une vitesse est positive dans le sens d'écoulement du verre, d'amont vers l'aval. Des bulles peuvent en effet se former dans tout le bassin de conditionnement, jusqu'à son extrémité, en conséquence du contact du verre avec les matériaux dudit bassin. Il existe alors une compétition entre la vitesse de montée des bulles et leur entraînement par le verre, notamment vers l'amont. Il est possible d'évaluer le pourcentage de bulles résiduelles et emmenées dans le canal via un calcul de modélisation connu de l'homme du métier selon lequel 100 000 bulles sont posées aléatoirement sur la sole du bassin de conditionnement et sont mises en mouvement par l'effet de la convection du verre et de leur tendance à remonter sous l'effet de la poussée d'Archimède.

Le passage du bassin de conditionnement au canal se fait par un brusque rétrécissement de la largeur de passage du verre ainsi que par une baisse de la profondeur de verre. Ce rétrécissement peut notamment être formé par des parois orthogonales à l'axe du dispositif.

On utilise de préférence pour le bassin de conditionnement, notamment pour une braise et éventuellement pour un corset, un matériau pour venir en contact avec le verre fondu et ne générant pas de défaut dans le verre. Il en est de même pour le canal menant le verre du bassin de conditionnement au dispositif de transformation. Dans ce canal, l'écoulement du verre est du type piston sans courroie de recirculation. Un matériau de cette sorte, comme l'alumine pure, notamment commercialisé sous la dénomination Jargal, est cependant extrêmement onéreux et est utilisé d'une part avec parcimonie, et d'autre part dans les zones d'écoulement les plus en aval avant le dispositif de transformation du verre.

Le four de fusion/affinage peut comprendre un compartiment de fusion et un compartiment d'affinage dont les profondeurs de sole respectives sont différentes. Le compartiment de fusion est situé en amont du compartiment d'affinage (en référence au sens d'écoulement du verre), et occupe généralement une plus grande surface de sole que celui d'affinage et peut être plus profond que la sole du compartiment d'affinage. La sole du compartiment de fusion est généralement essentiellement plane. La sole du compartiment d'affinage est également généralement essentiellement plane. Le passage de la sole de la zone de fusion à la sole de la zone d'affinage peut être abrupte, c'est-à-dire se faire par une marche verticale. Cependant, ce peut être un passage plus progressif, du type pente inclinée ou succession de marches, pouvant se faire sur une distance généralement d'au plus 1m. Le four de fusion/affinage comprend en général quatre parois, une paroi amont, une paroi aval et deux parois latérales. Généralement, les deux parois latérales sont parallèles et restent à la même distance l'une de l'autre tout le long du four. La différence de profondeur et donc de hauteur de verre entre les soles des deux zones du four peut se traduire par la formation d'une courroie de recirculation très intense en zone de fusion (zone amont du four). Ainsi, la sole de la zone de fusion est suffisamment profonde pour que l'intensité convective de la courroie de recirculation amont, en zone de fusion, soit de préférence comprise entre 3 et 5 fois la tirée du four. La boucle de recirculation aval est d'intensité beaucoup plus réduite. Notons que la transparence du verre peut influer sur l'intensité convective, un verre plus transparent donnant lieu généralement à une intensité convective plus forte. L'intensité convective d'une boucle de recirculation est égale au rapport du débit de verre circulant de l'amont vers l'aval dans cette boucle (débit aller) sur la tirée du dispositif et donc du procédé.

Le rapport entre la hauteur de verre en zone de fusion sur celle en zone d'affinage peut notamment être compris entre 1,2 et 2. La sole en zone de fusion et la sole en zone d'affinage peuvent porter quelques strictions (marches de hauteur inférieure à 50cm). Généralement, le rapport entre la longueur et la largeur du four de fusion/affinage est compris dans le domaine allant de 2 à 4.

Le dispositif de transformation du verre qui suit le dispositif ou procédé selon l'invention, peut être un dispositif de transformation en verre creux ou de transformation en fibre mais est plus généralement un dispositif de transformation en verre plat, du type flottage du verre sur un bain de métal fondu comme l'étain, ou du type laminage. Ce dispositif de transformation est alimenté par un canal, lui-même alimenté par le bassin de conditionnement. Le verre présente un écoulement piston dans le canal.

L'invention permet la réalisation et l'utilisation d'un dispositif de fusion comprenant un four de fusion/affinage et un bassin de conditionnement tel que le rapport de la surface sous flamme du four sur la surface du bassin de conditionnement soit supérieur à 1,4 et même supérieur à 1,6 et même supérieur à 1,8. De préférence, le rapport de la surface sous flamme du four sur la surface du bassin de conditionnement ($S_f/S_{cond}$) est inférieur à 4 et de manière encore préférée inférieur à 3.

Le dispositif et le procédé selon l'invention sont aptes à la fusion de tout verre, teinté ou non-teinté, notamment du type sodocalcique, aluminosilicate, borosilicate ou autre.

La présente invention concerne tout procédé et dispositif comprenant ou utilisant un four verrier à brûleurs transversaux, notamment pour la fusion du verre en vue de son formage en verre plat dans une unité de flottage. L'invention s'adresse plus particulièrement aux procédés et dispositifs dont le four de fusion/affinage a une capacité de 500 à 1500 m$^3$ de verre et plus particulièrement de 700 à 1400 m$^3$ de verre. L'invention s'adresse plus particulièrement aux procédés et dispositifs dont la tirée est de 400 à 1300 tonnes de verre par jour. L'invention concerne plus particulièrement les procédés et dispositifs dont le four présente une hauteur de verre comprise dans le domaine allant de 0,8 à 2 mètres (zone de fusion et zone d'affinage), cette hauteur pouvant varier d'amont en aval, et un bassin de conditionnement dont la hauteur de verre est comprise dans le domaine allant de 0,4 à 1,40 mètre, cette hauteur pouvant varier d'amont en aval.

L'invention concerne notamment un procédé de préparation de verre mettant en oeuvre le dispositif selon l'invention. L'invention s'adresse plus particulièrement aux dispositifs et procédés pour lesquelles la température maximale en surface du verre dans le four est comprise entre 1350 et 1650°C et la température du verre sortant du bassin de conditionnement est comprise entre 1000 et 1400°C.

Les figures ci-dessous décrites ne sont pas à l'échelle.

La figure 1 représente un dispositif selon l'invention, en a) en vue de dessus et en b) en vue de côté. Il comprend de l'amont vers l'aval un four 1, lequel comprend une zone d'introduction des matières premières 20, une zone de fusion 2, une zone d'affinage 3, un bassin de conditionnement comprenant un corset 4 et une braise 5. La braise délivre du verre fondu à la température appropriée à l'unité de transformation via le canal 6 à l'intérieur duquel l'écoulement du verre est piston. Le four de fusion/affinage 1 est muni de brûleurs aériens transversaux dont sont représentées en 7 six arrivées d'air. Les deux parois latérales 11 et 12 sont munies de façon symétrique de brûleurs transversaux se faisant face, ces brûleurs fonctionnant alternativement, « en inversion », de façon connue de l'homme du métier. Les limites extérieures des quatre arrivées d'air externes (8, 9) forment les coins du quadrilatère 10, hachuré en a), et représentant vue de dessus la surface sous flamme dite $S_f$. La lettre $x_0$ représente l'abscisse de la fin de la surface sous flamme dans le four (côté aval du quadrilatère représentant la surface sous flamme) et la lettre $x_1$ représente l'abscisse de la fin du bassin de conditionnement, sur l'axe longitudinal médian AA' du dispositif (amont en A, aval en A') qui correspond à la direction générale d'écoulement du verre. Sous le niveau de la surface de verre fondu 13, tournent deux courroies de convection 14 et 15. La première 14, dite boucle de recirculation amont, est relativement intense dans le compartiment de fusion et passe notamment sous le premier brûleur amont 9. La seconde 15, dite boucle de recirculation aval, est moins intense et passe par la zone d'affinage du four, puis par le corset et la braise, et ne passe pas dans le canal 6. Une striction 16 renforce ici la délimitation et la formation des deux courroies de convection 14 et 15. Le passage du four au corset se fait par un rétrécissement brusque de la largeur et de la section de passage du verre, ici par des parois 19 et 19' formant un angle de 90° avec la direction médiane d'écoulement du verre. Le passage du corset à la braise se fait par un élargissement brusque de la section de passage du verre, ici par des parois 18 et 18' formant un angle de 90° avec la direction médiane d'écoulement du verre. Un barrage plongeant 17 au début du corset diminue la section de passage pour le verre et constitue un élément singulier dont il convient de calculer le $K_{si}$. La surface du verre 60 dans la braise, c'est-dire la surface en contact avec l'atmosphère de la braise est soumise à un soufflage d'air dans celle-ci pour refroidir le verre. Cet air passe de la braise au dispositif de conditionnement mais va le moins possible dans le four de fusion affinage.

La figure 2 représente, vue de dessus, le passage de la zone d'affinage 21 d'un four au bassin de conditionnement constitué d'un corset 22 puis d'une braise 23. Les flèches sur l'axe longitudinal médian AA' symbolisent l'écoulement du verre de l'amont vers l'aval. Le dispositif est symétrique de part et d'autre de l'axe AA'. Au passage du four au corset, on a une réduction brusque de largeur du passage du verre par des parois 24 et 24' du four formant un angle $\alpha$ avec la direction d'écoulement du verre d'au moins 40°, et ce, de part et d'autre de l'axe AA' du dispositif. Au passage du corset à la braise, on a un net élargissement de la largeur de passage pour le verre obtenu par des parois 25 et 25' formant un angle $\beta$ de plus de 40° avec la direction d'écoulement du verre. Cet élargissement a lieu de part et d'autre de l'axe longitudinal médian du dispositif.

La figure 3 représente une marche 30 réduisant nettement la section de passage du verre dont la surface est représentée en 31 et la direction d'écoulement est représentée par des flèches, ladite marche pouvant se trouver dans un bassin de conditionnement, notamment dans un corset ou dans une braise. Il s'agit d'un élément singulier dont il convient de calculer le *Ks.* Le début de l'élément singulier se trouve au point 32 (c'est un point sur la figure mais dans la réalité c'est bien entendu une ligne perpendiculaire au sens général d'écoulement du verre) où il commence à réduire la section de passage du verre par une paroi 33 formant un angle $\delta$ avec la direction générale d'écoulement du verre supérieur à 40°. La fin de l'élément singulier se trouve au point 34 à l'endroit où il finit d'augmenter la section de passage du verre par une paroi 35 formant un angle $\gamma$ supérieur à 40° avec la direction d'écoulement générale du verre. La distance entre le point 32 et le point 34 est inférieure à 2m parallèlement à la direction générale d'écoulement du verre représenté par les flèches horizontales. Cette marche est à l'origine d'une section de passage minimale 36 pour le verre.

La figure 4 représente un barrage 40 plongeant dans le verre dont la surface est représentée en 41, et la direction d'écoulement est représentée par des flèches, ledit barrage pouvant se trouver dans un bassin de conditionnement, notamment dans un corset ou dans une braise. Il s'agit d'un élément singulier dont il convient de calculer le $K_{si}$. Le début de l'élément singulier se trouve au point 42 où il commence à réduire la section de passage du verre par une paroi 43 formant un angle $\phi$ avec la direction générale d'écoulement du verre supérieur à 40°. La fin de l'élément singulier se trouve au point 44 à l'endroit où il finit d'augmenter la section de passage du verre par une paroi 45 formant un angle $\psi$ supérieur à 40° avec la direction d'écoulement générale du verre. La distance entre le point 42 et le point 44 est inférieure à 2m parallèlement à la direction générale d'écoulement du verre représenté par les flèches horizontales. Ce barrage est à l'origine d'une section de passage minimale 46 pour le verre.

La figure 5 a) représente un plan en coupe du dispositif orthogonalement au sens d'écoulement du verre à une abscisse x. Il peut s'agir notamment d'une coupe dans le corset ou dans la braise. Le verre 50 s'écoule orthogonalement au plan de la figure. Le verre est contenu par la sole 51 et les blocs de cuve 52 et 52', sole et blocs de cuve faisant partie de l'infrastructure du dispositif. Un barrage 53 plonge dans le verre sur une partie seulement de la distance entre les blocs de cuve dans le plan de la section de passage du verre. Le système de maintien du barrage n'est pas représenté, ni la voûte couvrant l'intérieur du dispositif. Le niveau de verre 55 en contact avec l'atmosphère interne se trouve en dessous de la cote supérieure 56 des blocs de cuve d'une distance 57 dite garde de sécurité. Les éléments 54 et 54' prennent appui sur les blocs de cuve, font partie de la superstructure. La figure 5 b) explicite ce que l'on entend par aire de la section de passage du verre en l'abscisse x et par périmètre de la section de passage du verre du dispositif à l'abscisse x, appliqué au cas de la figure 5 a). L'aire de la section de passage du verre est l'aire de la zone hachurée de la figure 5 b). Le périmètre de la section de passage du verre est la somme de la longueur des segments AB, BC, CD, DE, EF, FG, GH, HA.

**EXEMPLES 1 à 19**

Tous les exemples sont réalisés sur un dispositif comme représenté à la figure 1 et comprenant un four de fusion/affinage suivi d'un bassin de conditionnement constitué d'un corset suivi d'une braise. Les tableaux 1 et 2 donnent le dimensionnement des différents éléments du dispositif et les résultats. Tous les fours des exemples avaient une surface sous flamme $S_f$ de 326,3 m². Tous les exemples étaient prévus pour une tirée de 900 tonnes par jour de verre fondu à la température maximale de 1590°C en surface du verre dans le four et à la température de 1130°C en sortie de braise. Le verre était de type sodo-calcique standard, avec une teneur massique de 700 ppm de $Fe_2O_3$ et 180 ppm de FeO. Pour tous les exemples sauf les exemples 5, 8, 19, un barrage de 50 mm d'épaisseur maintenu par la superstructure du corset et trempant dans le verre sur 400mm de profondeur était placé dans le corset de sorte que la face amont de ce barrage se trouvait à 3,2 mètres de l'entrée du corset. Dans le cas de l'exemple 5, il n'y avait aucun barrage (Ks=0). Pour l'exemple 8, le barrage plongeait dans le verre sur une profondeur de 350 mm. Pour l'exemple 19, le barrage plongeait dans le verre sur une profondeur de 500 mm. Un barrage était le cas échéant le seul élément singulier pour lequel il est nécessaire de calculer un $K_{si}$.

Pour tous les exemples,

- la longueur de la zone de fusion était 26675 mm,
- la largeur de la zone de fusion et d'affinage était 13000 mm,
- la longueur de la zone d'affinage était 17000 mm,
- la distance entre la fin de la surface sous flamme et l'entrée du corset était 14075 mm,
- $h_f$ représente la hauteur de verre dans la zone de fusion,
- $h_a$ représente la hauteur de verre dans la zone d'affinage,
- $V_{fa}$ représente le volume de verre dans le four,
- $L_c$ représente la longueur du corset,
- $l_c$ représente la largeur du corset,
- $h_c$ représente la hauteur de verre dans le corset,
- $L_b$ représente la longueur de braise,
- $l_b$ représente la largeur de braise,
- $h_b$ représente la hauteur de verre dans la braise,
- ΔQ représente la qualité du verre relativement à la qualité du verre de l'exemple 1 (cas de référence), soit la différence entre la qualité du verre de l'exemple i considéré et la qualité du verre de l'exemple 1, le tout divisé par la qualité de l'exemple 1 $\Delta Q=(Q_i-Q_1)/Q_1$ ; c'est le temps de séjour moyen à plus de 1400°C qui est considéré. Ce ΔQ est multiplié par 100 dans le tableau 1 pour exprimer le résultat en pourcentage.
- ΔConso représente la consommation énergétique de tout le dispositif relativement à la consommation de l'exemple 1, soit la différence entre la consommation de l'exemple i considéré et la consommation de l'exemple 1, le tout divisé par la consommation de l'exemple 1 : $\Delta Conso=(Conso_i-Conso_1)/Conso_1$ ; ce ΔConso est multiplié par 100 dans le tableau 1 pour exprimer le résultat en pourcentage.
- ΔSouff représente l'intensité de soufflage de refroidissement en braise relativement à l'intensité de soufflage de refroidissement en braise de l'exemple 1, soit la différence entre l'intensité de soufflage de refroidissement en braise de l'exemple i considéré et l'intensité de soufflage de refroidissement en braise de l'exemple 1, le tout divisé par l'intensité de soufflage de refroidissement en braise de l'exemple 1 : $\Delta Souff=(Souff_i-Souff_1)/Souff_1$ ; ce ΔSouff est multiplié par 100 dans le tableau 2 pour exprimer le résultat en pourcentage.

Tableau 1

| Ex N° | $h_f$ (m) | $h_a$ (m) | $V_{fa}$ (m³) | $L_c$ (m) | $l_c$ (m) | $h_c$ (m) | $L_b$ (m) | $l_b$ (m) | $h_b$ (m) | K | ΔQ (%) | ΔConso (%) |
|---|---|---|---|---|---|---|---|---|---|---|---|---|
| 1 | 1,45 | 1,45 | 823 | 7 | 4,8 | 1,45 | 17 | 12 | 1,45 | 2,31 | 0 | 0,0 |
| 2 | 1,45 | 1,45 | 823 | 7 | 4,8 | 1,45 | 12,75 | 9 | 1,45 | 2,35 | -7 | 1,8 |
| 3 | 1,45 | 1,27 | 783 | 7 | 4,8 | 1,27 | 12,75 | 9 | 1,27 | 3,63 | 3 | -1,2 |
| 4 | 1,45 | 1,27 | 783 | 7 | 4,8 | 1,27 | 12,75 | 9 | 0,89 | 5,07 | 11 | -3,5 |
| 5 | 1,45 | 1,27 | 783 | 7 | 4,8 | 0,89 | 12,75 | 9 | 0,89 | 5,67 | 12 | -4,1 |
| 6 | 1,45 | 1,27 | 783 | 7 | 6,5 | 0,89 | 12,75 | 9 | 0,89 | 8,50 | 23 | -6,9 |
| 7 | 1,45 | 1,27 | 783 | 7 | 4,8 | 1,27 | 12,75 | 9 | 0,6 | 9,86 | 28 | -8,2 |

(suite)

| Ex N° | $h_f$ (m) | $h_a$ (m) | $V_{fa}$ (m³) | $L_c$ (m) | $l_c$ (m) | $h_c$ (m) | $L_b$ (m) | $l_b$ (m) | $h_b$ (m) | K | $\Delta$Q (%) | $\Delta$Conso (%) |
|---|---|---|---|---|---|---|---|---|---|---|---|---|
| 8 | 1,45 | 1,27 | 783 | 7 | 4,8 | 0,89 | 12,75 | 9 | 0,89 | 10,01 | 26 | -7,4 |
| 9 | 1,45 | 1,27 | 783 | 4,5 | 4,8 | 0,89 | 12,75 | 9 | 0,89 | 11,46 | 31 | -8,6 |
| 10 | 1,45 | 1,27 | 783 | 7 | 4,8 | 0,89 | 12,75 | 13 | 0,89 | 11,65 | 31 | -8,3 |
| 11 | 2 | 2 | 1136 | 7 | 4,8 | 0,89 | 12,75 | 9 | 0,89 | 12,02 | 28 | -7,2 |
| 12 | 1,45 | 1,45 | 823 | 7 | 4,8 | 0,89 | 12,75 | 9 | 0,89 | 12,26 | 27 | -8,5 |
| 13 | 1,45 | 1,27 | 783 | 7 | 4,8 | 0,89 | 12,75 | 9 | 0,89 | 12,45 | 28 | -8,4 |
| 14 | 2 | 1,27 | 974 | 7 | 4,8 | 0,89 | 12,75 | 9 | 0,89 | 12,45 | 28 | -7,5 |
| 15 | 1,27 | 1,27 | 721 | 7 | 4,8 | 0,89 | 12,75 | 9 | 0,89 | 12,45 | 27 | -9,3 |
| 16 | 1,45 | 0,89 | 700 | 7 | 4,8 | 0,89 | 12,75 | 9 | 0,89 | 13,51 | 32 | -8,9 |
| 17 | 1,45 | 1,27 | 783 | 7 | 4,8 | 0,89 | 12,75 | 4,8 | 0,89 | 15,17 | 36 | -9,1 |
| 18 | 1,45 | 1,27 | 783 | 7 | 3,7 | 0,89 | 12,75 | 9 | 0,89 | 18,22 | 36 | -9,7 |
| 19 | 1,45 | 1,27 | 783 | 7 | 4,8 | 0,89 | 12,75 | 9 | 0,89 | 21,76 | 41 | -9,9 |

Les valeurs de $K_a$ et du $K_S$ dû au barrage plongeant (avec $K=K_a+K_s$), ainsi que les caractéristiques de surface du bassin de conditionnement et de soufflage sont détaillées dans le tableau 2, $\sigma_{sc}$ représentant la section minimale de passage du verre produite par le barrage dans le corset en tant qu'élément singulier, $S_c$ représentant la surface de verre en contact avec l'atmosphère dans le corset, $S_b$ représentant la surface de verre en contact avec l'atmosphère dans la braise, $S_{cond}$ représentant la surface de verre en contact avec l'atmosphère dans le bassin de conditionnement (avec $S_{cond}=S_c+S_b$), $S_f/S_{cond}$ représentant le rapport de la surface sous flammes sur la surface de verre en contact avec l'atmosphère dans le bassin de conditionnement.

Tableau 2

| Ex N° | Ka | $\sigma_{sc}$ (m²) | $K_s$ | K | $S_c$ (m²) | $S_b$ (m²) | $S_{cond}$ (m²) | $S_f/S_{cond}$ | $\Delta$Souff (%) |
|---|---|---|---|---|---|---|---|---|---|
| 1 | 1,75 | 5,04 | 0,56 | 2,31 | 33,6 | 204 | 237,6 | 1,37 | 0 |
| 2 | 1,79 | 5,04 | 0,56 | 2,35 | 33,6 | 114,75 | 148,35 | 2,20 | 119 |
| 3 | 2,55 | 4,176 | 1,07 | 3,63 | 33,6 | 114,75 | 148,35 | 2,20 | 83 |
| 4 | 4,00 | 4,176 | 1,07 | 5,07 | 33,6 | 114,75 | 148,35 | 2,20 | 55 |
| 5 | 5,67 | 4,272 | 0 | 5,67 | 33,6 | 114,75 | 148,35 | 2,20 | 46 |
| 6 | 4,84 | 3,185 | 3,65 | 8,50 | 45,5 | 114,75 | 160,25 | 2,04 | 14 |
| 7 | 8,78 | 4,176 | 1,07 | 9,86 | 33,6 | 114,75 | 148,35 | 2,20 | 7 |
| 8 | 5,73 | 2,592 | 4,29 | 10,01 | 33,6 | 114,75 | 148,35 | 2,20 | 11 |
| 9 | 4,77 | 2,352 | 6,70 | 11,46 | 21,6 | 114,75 | 136,35 | 2,39 | 17 |
| 10 | 4,96 | 2,352 | 6,70 | 11,65 | 33,6 | 165,75 | 199,35 | 1,64 | -38 |
| 11 | 5,32 | 2,352 | 6,70 | 12,02 | 33,6 | 114,75 | 148,35 | 2,20 | 0 |
| 12 | 5,56 | 2,352 | 6,70 | 12,26 | 33,6 | 114,75 | 148,35 | 2,20 | -6 |
| 13 | 5,75 | 2,352 | 6,70 | 12,45 | 33,6 | 114,75 | 148,35 | 2,20 | 2 |
| 14 | 5,75 | 2,352 | 6,70 | 12,45 | 33,6 | 114,75 | 148,35 | 2,20 | 2 |
| 15 | 5,75 | 2,352 | 6,70 | 12,45 | 33,6 | 114,75 | 148,35 | 2,20 | -3 |
| 16 | 6,81 | 2,352 | 6,70 | 13,51 | 33,6 | 114,75 | 148,35 | 2,20 | -2 |
| 17 | 8,47 | 2,352 | 6,70 | 15,17 | 33,6 | 61,2 | 94,8 | 3,44 | 89 |
| 18 | 6,94 | 1,813 | 11,27 | 18,22 | 25,9 | 114,75 | 140,65 | 2,32 | -6 |

(suite)

| Ex N° | Ka | $\sigma_{sc}$ (m²) | $K_s$ | K | $S_c$ (m²) | $S_b$ (m²) | $S_{cond}$ (m²) | $S_f$ /$S_{cond}$ | ΔSouff (%) |
|-------|-----|--------|-------|-------|--------|---------|----------|----------|----------|
| **19** | 5,84 | 1,872 | 15,92 | 21,76 | 33,6 | 114,75 | 148,35 | 2,20 | -15 |

Les exemples sont ordonnés de 1 à 19 selon l'augmentation du facteur K. On constate une corrélation avec la qualité ΔQ obtenue pour le verre, les exemples 3 à 19 menant à une meilleure qualité de verre. On voit qu'il convient que K soit supérieur à 3,5 et de préférence supérieur à 5,5 et de manière encore préférée supérieur à 7,5. Les consommations énergétiques pour les exemples 3 à 19 sont également bonnes. De petites braises de 114,75 m² sont généralement suffisantes, sauf pour l'exemple 2 nécessitant un soufflage trop important. Pour l'intensité de soufflage utilisée pour l'exemple 1, le risque d'apparition de défauts optiques en surface du verre est faible. Par contre, ce risque est réel dans le cas de l'exemple 2, puisqu'une surface de bassin de conditionnement de 148,35 m² nécessite un ΔSouff supérieure de 119% à celui de l'exemple 1. On constate que si ΔSouff est supérieure de 90% à celle de l'exemple 1, alors, le risque d'apparition de défauts optiques en surface est trop élevé, ce qui est le cas de l'exemple 2. De préférence, ΔSouff est inférieur de 85% à celle de l'exemple 1. Pour y parvenir, il convient que K soit suffisamment élevé conformément à la présente invention, et que le rapport de la surface sous flamme sur la surface du bassin de conditionnement ($S_f$/$S_{cond}$) soit inférieur à 4 et de préférence inférieur à 3, et de manière encore préférée inférieur à 2,5. Dans le cas de l'exemple 10, la surface du bassin de conditionnement est très importante et donc onéreuse à produire, cette forte surface expliquant l'intensité de soufflage réduite. Dans cette configuration, la surface du bassin de conditionnement pourrait être réduite.

Pour tous les exemples, la température de sole était inférieure à 1360°C.

Pour tous les exemples sauf l'exemple 7, le verre contient moins de 50% de bulles résiduelles. L'exemple 7 correspond à l'exemple 4 sauf que la profondeur de braise était de 600 mm. A cause de la faible profondeur de braise, la courroie de recirculation passant dans le bassin de conditionnement traverse le corset et une bonne partie de la braise mais elle ne se développe pas jusqu'à l'entrée du canal. Dans les derniers 7 mètres de la braise, l'écoulement du verre est piston. En entrée de canal le verre contient 60% de bulles résiduelles.

## EXEMPLE 20

Le dispositif a les mêmes dimensions que celui de l'exemple 1, sauf qu'il n'y a pas de barrage, que la profondeur de la braise est diminuée de 50% (à 0,72 m) et que la largeur de braise est réduite à 6 mètres. La valeur de K est de 10,22. La courroie de recirculation passant par le bassin de conditionnement traverse le corset et une partie de la braise sans aller jusqu'au canal, puisque les derniers 7 mètres de la braise ne sont pas le siège d'une recirculation, l'écoulement étant alors piston. En entrée de canal le verre contient 50,4% de bulles résiduelles. Les autres résultats sont les suivants : ΔSouff = 24%, Sf/Scond=2,41 , ΔQ= -8.

## Revendications

1.  Procédé de fabrication de verre fondu par un dispositif comprenant d'amont en aval un four de fusion (1) et d'affinage de verre muni de brûleurs aériens transversaux (7), puis un bassin de conditionnement comprenant un ou plusieurs compartiments (4, 5), ledit four comprenant une zone de fusion (2) et une zone d'affinage (3), la sole de la zone d'affinage et la sole du bassin de conditionnement étant suffisamment profondes pour qu'une même boucle de recirculation (15) dite boucle aval passe par la zone d'affinage et par tout compartiment du bassin de conditionnement (4, 5), ledit bassin de conditionnement étant alimenté en verre par le four, ledit procédé comprenant la fusion du verre dans ledit four de fusion et d'affinage, le dimensionnement du dispositif étant tel que K soit supérieur à 3,5 avec

$$K = K_a + \sum_i K_{S_i}$$

dans laquelle

$$K_a = 0{,}000727 \times S_f \times \int_{x_0}^{x_1} \frac{[P(x)]^2}{[\sigma(x)]^3} dx$$

dans laquelle

$S_f$ représente la surface sous flamme dans le four;
$x_0$ est l'abscisse sur la direction générale d'écoulement du verre de la fin de la surface sous flamme (10) dans le four ;
$x_1$ est l'abscisse sur la direction générale d'écoulement du verre de la fin du bassin de conditionnement ;
$\sigma(x)$ représente l'aire de la section de passage du verre du dispositif à l'abscisse x;
$P(x)$ représente le périmètre de la section de passage du verre du dispositif à l'abscisse x;

$\sum_i K_{S_i}$ représente la somme des $K_{S_i}$ imputables à un élément singulier (17) dans le dispositif en aval de la surface sous flamme dans le four, un élément singulier produisant, d'amont en aval et sur moins de 2 mètres selon la direction d'écoulement du verre, une diminution de section de passage du verre de plus de 10% puis une augmentation de section de passage du verre de plus de 10%, avec

$$K_{S_i} = 0,0012 \times \left( exp\left[ 5,16 \left( \frac{\sigma_i - \sigma_{S_i}}{\sigma_i} \right)^{2,55} \right] - 1 \right) \left( \frac{S_f}{\sigma_i} \right)^2 \, ,$$

$\sigma_i$ représentant l'aire de la section de passage du verre juste en amont de l'élément singulier $S_i$,
$\sigma_{S_i}$ représentant l'aire de la section minimale de passage produite par l'élément singulier $S_i$.

2. Procédé selon la revendication précédente, **caractérisé en ce que** K > 5,5.

3. Procédé selon la revendication précédente, **caractérisé en ce que** K > 7,5.

4. Procédé selon la revendication précédente, **caractérisé en ce que** K est supérieur à 9, voire même supérieur à 10,5 , voire même supérieur à 13.

5. Procédé selon l'une des revendications précédentes, **caractérisé en ce que** le rapport de la surface sous flamme dans le four sur la surface du bassin de conditionnement est supérieur à 1,4 , et même supérieur à 1,6 , et même supérieur à 1,8.

6. Procédé selon l'une des revendications précédentes, **caractérisé en ce que** le four est suffisamment profond pour qu'une boucle amont (14) de recirculation et une boucle aval (15) de recirculation s'exécutent dans le four.

7. Procédé selon l'une des revendications précédentes, **caractérisé en ce que** le bassin de conditionnement comprend, d'amont en aval, un corset (4) puis une braise (5).

8. Procédé selon l'une des revendications précédentes, **caractérisé en ce que** le four a une capacité de 500 à 1500 $m^3$ de verre et plus particulièrement de 700 à 1400 $m^3$ de verre.

9. Procédé selon l'une des revendications précédentes, **caractérisé en ce que** sa tirée est de 400 à 1300 tonnes de verre par jour.

10. Procédé selon l'une des revendications précédentes, **caractérisé en ce que** les brûleurs transversaux (7) utilisent un comburant comprenant 10 à 30% en volume d'$O_2$, sont munis de régénérateurs et fonctionnent par paires et en inversion.

11. Procédé selon l'une des revendications 1 à 9, **caractérisé en ce que** les brûleurs transversaux utilisent un comburant contenant 80 à 100% en volume d'$O_2$.

12. Procédé selon l'une des revendications précédentes, **caractérisé en ce que** dans tout plan vertical transversal à l'axe longitudinal du four dans le bassin de conditionnement, il existe des points dans le verre ayant une composante de vitesse longitudinale allant de l'aval vers l'amont.

13. Procédé selon l'une des revendications précédentes, **caractérisé en ce qu'**après le bassin de conditionnement, le verre passe dans un canal (6) alimentant lui-même un dispositif de formage, aucun courant de retour n'ayant lieu dans le canal.

**14.** Procédé selon la revendication précédente, **caractérisé en ce que** la longueur du canal (6) est comprise dans le domaine allant de 0,3 à 10 m, notamment dans le domaine allant de 0,8 à 6 m.

**15.** Procédé de fabrication de verre plat comprenant la fabrication de verre fondu par le procédé de l'une des revendications précédentes, ledit verre fondu étant ensuite transformé en verre plat dans une enceinte de flottage du verre sur un bain de métal fondu.

**16.** Dispositif de fabrication de verre fondu comprenant d'amont en aval un four de fusion (1) et d'affinage de verre muni de brûleurs aériens transversaux (7), puis un bassin de conditionnement comprenant un ou plusieurs compartiments (4, 5), ledit four comprenant une zone de fusion (2) et une zone d'affinage (3), la sole de la zone d'affinage et la sole du bassin de conditionnement étant suffisamment profondes pour qu'une même boucle de recirculation (15) dite boucle aval passe par la zone d'affinage et par tout compartiment du bassin de conditionnement (4, 5), ledit bassin de conditionnement étant alimenté en verre par le four, le dimensionnement du dispositif de fabrication étant tel que K soit supérieur à 3,5 avec

$$K = K_a + \sum_i K_{S_i}$$

dans laquelle

$$K_a = 0{,}000727 \times S_f \times \int_{x_0}^{x_1} \frac{[P(x)]^2}{[\sigma(x)]^3} \, dx$$

dans laquelle

$S_f$ représente la surface sous flamme dans le four;
$x_0$ est l'abscisse sur la direction générale d'écoulement du verre de la fin de la surface sous flamme (10) dans le four ;
$x_1$ est l'abscisse sur la direction générale d'écoulement du verre de la fin du bassin de conditionnement ;
$\sigma(x)$ représente l'aire de la section de passage du verre du dispositif à l'abscisse x;
$P(x)$ représente le périmètre de la section de passage du verre du dispositif à l'abscisse x;

$\sum_i K_{S_i}$ représente la somme des $K_{S_i}$ imputables à un élément singulier (17) dans le dispositif en aval de la surface sous flamme dans le four, un élément singulier produisant, d'amont en aval et sur moins de 2 mètres selon la direction d'écoulement du verre, une diminution de section de passage du verre de plus de 10% puis une augmentation de section de passage du verre de plus de 10%, avec

$$K_{S_i} = 0{,}0012 \times \left( exp\left[ 5{,}16 \left( \frac{\sigma_i - \sigma_{S_i}}{\sigma_i} \right)^{2,55} \right] - 1 \right) \left( \frac{S_f}{\sigma_i} \right)^2 \, ,$$

$\sigma_i$ représentant l'aire de la section de passage du verre juste en amont de l'élément singulier $S_i$,
$\sigma_{S_i}$ représentant l'aire de la section minimale de passage produite par l'élément singulier $S_i$,

ledit dispositif comprenant sur toute sa longueur des blocs de cuve contenant le verre fondu, la hauteur de verre étant la distance entre la cote supérieure (56) des blocs de cuve (52, 52') diminuée d'une garde de sécurité (57) comprise entre 30 et 130 mm, notamment 80 mm, et la cote de la sole (51).

**17.** Dispositif selon la revendication précédente, **caractérisé en ce que** K > 5,5.

**18.** Dispositif selon la revendication précédente, **caractérisé en ce que** K > 7,5.

**19.** Dispositif selon la revendication précédente, **caractérisé en ce que** K est supérieur à 9, voire même supérieur à 10,5 , voire même supérieur à 13.

**20.** Dispositif selon l'une des revendications précédentes de dispositif, **caractérisé en ce que** le rapport de la surface sous flamme (10) dans le four sur la surface du bassin de conditionnement est supérieur à 1,4 , et même supérieur à 1,6 , et même supérieur à 1,8.

**21.** Dispositif selon l'une des revendications précédentes de dispositif, **caractérisé en ce que** le rapport de la surface sous flamme dans le four sur la surface du bassin de conditionnement est inférieur à 4 et de préférence inférieure à 3.

**22.** Dispositif selon l'une des revendications précédentes de dispositif, **caractérisé en ce que** le four est suffisamment profond pour qu'une boucle amont (14) de recirculation et une boucle aval (15) de recirculation s'exécutent dans le four.

**23.** Dispositif selon l'une des revendications précédentes de dispositif, **caractérisé en ce que** le bassin de conditionnement comprend, d'amont en aval, un corset (4) puis une braise (5).

**24.** Dispositif selon l'une des revendications précédentes de dispositif, **caractérisé en ce que** le four a une capacité de 500 à 1500 m$^3$ de verre et plus particulièrement de 700 à 1400 m$^3$ de verre.

**25.** Dispositif selon l'une des revendications précédentes de dispositif, **caractérisé en ce que** sa tirée est de 400 à 1300 tonnes de verre par jour.

**26.** Dispositif selon l'une des revendications précédentes de dispositif, **caractérisé en ce que** les brûleurs transversaux (7) utilisent un comburant comprenant 10 à 30% en volume d'$O_2$, sont munis de régénérateurs et fonctionnent par paires et en inversion.

**27.** Dispositif selon l'une des revendications précédentes de dispositif, **caractérisé en ce que** dans tout plan vertical transversal à l'axe longitudinal du four dans le bassin de conditionnement, il existe des points dans le verre ayant une composante de vitesse longitudinale allant de l'aval vers l'amont.

**28.** Dispositif selon l'une des revendications précédentes de dispositif, **caractérisé en ce qu'**après le bassin de conditionnement, le verre passe dans un canal (6) alimentant lui-même un dispositif de formage, aucun courant de retour n'ayant lieu dans le canal.

**29.** Dispositif selon la revendication précédente, **caractérisé en ce que** la longueur du canal est comprise dans le domaine allant de 0,3 à 10 m, notamment dans le domaine allant de 0,8 à 6 m.

**30.** Dispositif de fabrication de verre plat comprenant le dispositif de fabrication de verre fondu de l'une des revendications précédentes de dispositif, suivi par une enceinte de flottage du verre sur un bain de métal fondu.

**31.** Dispositif selon l'une des revendications 16 à 30 **caractérisé en ce qu'**il existe une cote (55) de la surface du verre à une distance comprise entre 30 et 130 mm sous la cote supérieure (56) des blocs de cuve (52, 52'), telle que K soit supérieur à 3,5 et de préférence supérieur à 5,5 et de manière encore préférée supérieur à 7,5, notamment supérieur à 9, voire même supérieur à 10,5, voire même supérieur 13.

**Patentansprüche**

**1.** Verfahren zur Glasschmelzeherstellung mittels einer Vorrichtung, die von der Anströmzur Abströmseite Folgendes umfasst: eine Wanne zum Schmelzen (1) und Läutern von Glas, die mit darüber angeordneten Querbrennern (7) ausgerüstet ist, danach ein Konditionierbecken mit einer oder mehreren Kammern (4, 5), wobei die Wanne eine Schmelzzone (2) und eine Läuterzone (3) umfasst, wobei der Boden der Läuterzone und der Boden des Konditionierbeckens tief genug sind, dass ein und dieselbe Rezirkulationsschleife (15), als abströmseitige Schleife bezeichnet, durch die Läuterzone und die gesamte Kammer des Konditionierbeckens (4, 5) verläuft, wobei das Konditionierbecken von der Wanne mit Glas beschickt wird, wobei das Verfahren das Schmelzen des Glases in der Schmelz- und Läuterwanne umfasst, wobei die Vorrichtung so bemessen ist, dass K größer als 3,5 ist, mit

$$K = K_a + \sum_i K_{S_i}$$

wobei

$$K_a = 0{,}000727 \times S_f \times \int_{x_0}^{x_1} \frac{[P(x)]^2}{[\sigma(x)]^3}\, dx$$

wobei

$S_f$ für die Fläche unter der Flamme in der Wanne steht;

$x_0$ der Abszissenwert in der Grundrichtung des Glasflusses am Ende der Fläche unter der Flamme (10) in der Wanne ist;

$x_1$ der Abszissenwert in der Grundrichtung des Glasflusses am Ende des Konditionierbeckens ist;

$\sigma(x)$ für den Flächeninhalt des Glasdurchflussquerschnitts der Vorrichtung am Abszissenwert x steht;

$P(x)$ für den Umfang des Glasdurchflussquerschnitts der Vorrichtung am Abszissenwert x steht;

$\sum_i K_{S_i}$ für die Summe der $K_{S_i}$ steht, die auf ein einzelnes Element (17) in der Vorrichtung stromabwärts von der Fläche unter der Flamme in der Wanne zurückzuführen sind, wobei ein einzelnes Element von der Anström- zur Abströmseite und über weniger als 2 Meter in der Fließrichtung des Glases eine Verkleinerung des Glasdurchflussquerschnitts von über 10 %, danach eine Vergrößerung des Glasdurchflussquerschnitts von über 10 % erzeugt, mit

$$K_{S_i} = 0{,}0012 \times \left( exp\left[ 5{,}16 \left( \frac{\sigma_i - \sigma_{S_i}}{\sigma_i} \right)^{2,55} \right] - 1 \right) \left( \frac{S_f}{\sigma_i} \right)^2 ,$$

wobei

$\sigma_i$ für den Flächeninhalt des Glasdurchflussquerschnitts unmittelbar vor dem einzelnen Element $S_i$ steht.

$\sigma_{S_i}$ für den Flächeninhalt des kleinsten Durchflussquerschnitts, der von dem einzelnen Element $S_i$ erzeugt wird, steht.

2. Verfahren nach dem vorhergehenden Anspruch, **dadurch gekennzeichnet, dass** K > 5,5 ist.

3. Verfahren nach dem vorhergehenden Anspruch, **dadurch gekennzeichnet, dass** K > 7,5 ist.

4. Verfahren nach dem vorhergehenden Anspruch, **dadurch gekennzeichnet, dass** K größer als 9 beziehungsweise sogar größer als 10,5 beziehungsweise sogar größer als 13 ist.

5. Verfahren nach einem der vorhergehenden Ansprüche, **dadurch gekennzeichnet, dass** das Verhältnis der Fläche unter der Flamme in der Wanne zur Fläche des Konditionierbeckens größer als 1,4 und sogar größer als 1,6 und sogar größer als 1,8 ist.

6. Verfahren nach einem der vorhergehenden Ansprüche, **dadurch gekennzeichnet, dass** die Wanne tief genug ist, dass sich eine anströmseitige Rezirkulationsschleife (14) und eine abströmseitige Rezirkulationsschleife (15) in der Wanne ausbilden.

7. Verfahren nach einem der vorhergehenden Ansprüche, **dadurch gekennzeichnet, dass** das Konditionierbecken eine Einengung (4) und, von der Anström- zur Abströmseite, danach einen Abstehbereich (5) umfasst.

8. Verfahren nach einem der vorhergehenden Ansprüche, **dadurch gekennzeichnet, dass** die Wanne ein Fassungsvermögen von 500 bis 1500 m$^3$ Glas und insbesondere von 700 bis 1400 m$^3$ Glas hat.

9. Verfahren nach einem der vorhergehenden Ansprüche, **dadurch gekennzeichnet, dass** sein Ausstoß 400 bis 1300 Tonnen Glas pro Tag beträgt.

**10.** Verfahren nach einem der vorhergehenden Ansprüche, **dadurch gekennzeichnet, dass** die Querbrenner (7) einen Brennstoff verwenden, der 10 bis 30 Vol.-% $O_2$ enthält, mit Regeneratoren ausgestattet sind und paarweise und in Umkehrung arbeiten.

**11.** Verfahren nach einem der Ansprüche 1 bis 9, **dadurch gekennzeichnet, dass** die Querbrenner einen Brennstoff verwenden, der 80 bis 100 Vol.-% $O_2$ enthält.

**12.** Verfahren nach einem der vorhergehenden Ansprüche, **dadurch gekennzeichnet, dass** in jeder Vertikalebene quer zur Längsachse der Wanne im Konditionierbecken Punkte im Glas vorhanden sind, die eine longitudinale Geschwindigkeitskomponente aufweisen, die von der Abströmseite zur Anströmseite weist.

**13.** Verfahren nach einem der vorhergehenden Ansprüche, **dadurch gekennzeichnet, dass** das Glas nach dem Konditionierbecken einen Kanal (6) passiert, der wiederum eine Formvorrichtung speist, wobei in dem Kanal kein Rückstrom erfolgt.

**14.** Verfahren nach dem vorhergehenden Anspruch, **dadurch gekennzeichnet, dass** die Länge des Kanals (6) im Bereich von 0,3 bis 10 m, insbesondere im Bereich von 0,8 bis 6 m, liegt.

**15.** Verfahren zur Flachglasherstellung, umfassend die Glasschmelzeherstellung mittels des Verfahrens nach einem der vorhergehenden Ansprüche, wobei die Glasschmelze anschließend in einer Glas-Float-Kammer auf einem Flüssigmetallbad zu Flachglas verarbeitet wird.

**16.** Vorrichtung zur Glasschmelzeherstellung, die von der Anström- zur Abströmseite Folgendes umfasst: eine Wanne zum Schmelzen (1) und Läutern von Glas, die mit darüber angeordneten Querbrennern (7) ausgerüstet ist, danach ein Konditionierbecken mit einer oder mehreren Kammern (4, 5), wobei die Wanne eine Schmelzzone (2) und eine Läuterzone (3) umfasst, wobei der Boden der Läuterzone und der Boden des Konditionierbecken tief genug sind, dass ein und dieselbe Rezirkulationsschleife (15), als abströmseitige Schleife bezeichnet, durch die Läuterzone und die gesamte Kammer des Konditionierbeckens (4, 5) verläuft, wobei das Konditionierbecken von der Wanne mit Glas beschickt wird und die Herstellungsvorrichtung so bemessen ist, dass K größer als 3,5 ist, mit

$$K = K_a + \sum_i K_{S_i}$$

wobei

$$K_a = 0{,}000727 \times S_f \times \int_{x_0}^{x_1} \frac{[P(x)]^2}{[\sigma(x)]^3} \, dx$$

wobei

$S_f$ die Fläche unter der Flamme in der Wanne darstellt;
$x_0$ der Abszissenwert in der Grundrichtung des Glasflusses am Ende der Fläche unter der Flamme (10) in der Wanne ist;
$x_1$ der Abszissenwert in der Grundrichtung des Glasflusses am Ende des Konditionierbeckens ist;
$\sigma(x)$ für den Flächeninhalt des Glasdurchflussquerschnitts der Vorrichtung am Abszissenwert x steht;
$P(x)$ für den Umfang des Glasdurchflussquerschnitts der Vorrichtung am Abszissenwert x steht;

$\Sigma_i \, K_{Si}$ für die Summe der $K_{Si}$ steht, die auf ein einzelnes Element (17) in der Vorrichtung stromabwärts von der Fläche unter der Flamme in der Wanne zurückzuführen sind, wobei ein einzelnes Element von der Anström- zur Abströmseite und über weniger als 2 Meter in der Fließrichtung des Glases eine Verkleinerung des Glasdurchflussquerschnitts von über 10 %, danach eine Vergrößerung des Glasdurchflussquerschnitts von über 10 % erzeugt, mit

$$K_{S_i} = 0{,}0012 \times \left( exp\left[ 5{,}16 \left( \frac{\sigma_i - \sigma_{S_i}}{\sigma_i} \right)^{2{,}55} \right] - 1 \right) \left( \frac{S_f}{\sigma_i} \right)^2 \, ,$$

wobei

$\sigma_i$ für den Flächeninhalt des Glasdurchflussquerschnitts unmittelbar vor dem einzelnen Element $S_i$ steht,

$\sigma_{Si}$ für den Flächeninhalt des kleinsten Durchflussquerschnitts, der von dem einzelnen Element $S_i$ erzeugt wird, steht,

die Vorrichtung auf ihrer gesamten Länge Wannenblöcke umfasst, welche die Glasschmelze enthalten, wobei die Glashöhe der Abstand zwischen dem oberen Maß (56) der Wannenblöcke (52, 52') abzüglich eines Sicherheitsmaßes (57) im Bereich zwischen 30 und 130 mm, insbesondere 80 mm, und dem Maß des Bodens (51) ist.

17. Vorrichtung nach dem vorhergehenden Anspruch, **dadurch gekennzeichnet, dass** K > 5,5 ist.

18. Vorrichtung nach dem vorhergehenden Anspruch, **dadurch gekennzeichnet, dass** K > 7,5 ist.

19. Vorrichtung nach dem vorhergehenden Anspruch, **dadurch gekennzeichnet, dass** K größer als 9 beziehungsweise sogar größer als 10,5 beziehungsweise sogar größer als 13 ist.

20. Vorrichtung nach einem der vorhergehenden Vorrichtungsansprüche, **dadurch gekennzeichnet, dass** das Verhältnis der Fläche unter der Flamme (10) in der Wanne zur Fläche des Konditionierbeckens größer als 1,4 und sogar größer als 1,6 und sogar größer als 1,8 ist.

21. Vorrichtung nach einem der vorhergehenden Vorrichtungsansprüche, **dadurch gekennzeichnet, dass** das Verhältnis der Fläche unter der Flamme in der Wanne zur Fläche des Konditionierbeckens kleiner als 4 und vorzugsweise kleiner als 3 ist.

22. Vorrichtung nach einem der vorhergehenden Vorrichtungsansprüche, **dadurch gekennzeichnet, dass** die Wanne tief genug ist, dass sich eine anströmseitige Rezirkulationsschleife (14) und eine abströmseitige Rezirkulationsschleife (15) in der Wanne ausbilden.

23. Vorrichtung nach einem der vorhergehenden Vorrichtungsansprüche, **dadurch gekennzeichnet, dass** das Konditionierbecken eine Einengung (4) und, von der Anström- zur Abströmseite, danach einen Abstehbereich (5) umfasst.

24. Vorrichtung nach einem der vorhergehenden Vorrichtungsansprüche, **dadurch gekennzeichnet, dass** die Wanne ein Fassungsvermögen von 500 bis 1500 m$^3$ Glas und insbesondere von 700 bis 1400 m$^3$ Glas hat.

25. Vorrichtung nach einem der vorhergehenden Vorrichtungsansprüche, **dadurch gekennzeichnet, dass** ihr Ausstoß bei 400 bis 1300 Tonnen Glas pro Tag liegt.

26. Vorrichtung nach einem der vorhergehenden Vorrichtungsansprüche, **dadurch gekennzeichnet, dass** die Querbrenner (7) einen Brennstoff mit 10 bis 30 Vol.-% $O_2$ verwenden, mit Regeneratoren ausgestattet sind und paarweise und in Umkehrung arbeiten.

27. Vorrichtung nach einem der vorhergehenden Vorrichtungsansprüche, **dadurch gekennzeichnet, dass** in jeder Vertikalebene quer zur Längsachse der Wanne im Konditionierbecken Punkte im Glas vorhanden sind, die eine longitudinale Geschwindigkeitskomponente aufweisen, die von der Abströmseite zur Anströmseite weist.

28. Vorrichtung nach einem der vorhergehenden Vorrichtungsansprüche, **dadurch gekennzeichnet, dass** das Glas nach dem Konditionierbecken einen Kanal (6) passiert, der wiederum eine Formvorrichtung speist, wobei in dem Kanal kein Rückstrom erfolgt.

29. Verfahren nach dem vorhergehenden Anspruch, **dadurch gekennzeichnet, dass** die Länge des Kanals im Bereich von 0,3 bis 10 m, insbesondere im Bereich von 0,8 bis 6 m, liegt.

30. Vorrichtung zur Flachglasherstellung, umfassend die Vorrichtung zur Glasschmelzeherstellung nach einem der vorhergehenden Vorrichtungsansprüche, gefolgt von einer Glas-Float-Kammer mit einem Flüssigmetallbad.

31. Vorrichtung nach einem der Ansprüche 16 bis 30, **dadurch gekennzeichnet, dass** es ein Maß (55) der Glasfläche in einem Abstand im Bereich zwischen 30 und 130 mm unterhalb des oberen Maßes (56) der Wannenblöcke (52, 52') gibt, derart, dass K größer als 3,5 und vorzugsweise größer als 5,5 und noch bevorzugter größer als 7,5, insbesondere größer als 9 beziehungsweise sogar größer als 10,5 beziehungsweise sogar größer als 13 ist.

**Claims**

1. Process for manufacturing molten glass in a device comprising from upstream to downstream a furnace (1) for melting and fining glass equipped with cross-fired overhead burners (7), then a conditioning basin comprising one or more compartments (4,5), said furnace comprising a melting zone (2) and a fining zone (3), the bottom of the fining zone and the bottom of the conditioning basin being deep enough that a single recirculation loop (15), called the downstream loop, passes through the fining zone and through all the compartments of the conditioning basin (4,5), said conditioning basin being supplied with glass by the furnace, said process comprising melting glass in said melting and fining furnace, the dimensions of the device being such that K is higher than 3.5, where

$$K = K_a + \sum_i K_{S_i}$$

in which

$$K_a = 0.000727 \times S_f \times \int_{x_0}^{x_1} \frac{[P(x)]^2}{[\sigma(x)]^3} dx$$

in which

$S_f$ represents the area under flame in the furnace;
$x_0$ is the abscissa in the general flow direction of the glass of the end of the area under flame (10) in the furnace;
$x_1$ is the abscissa in the general flow direction of the glass of the end of the conditioning basin;
$\sigma(x)$ represents the area of the cross section of flow of the glass of the device at the abscissa x;
$P(x)$ represents the perimeter of the cross section of flow of the glass of the device at the abscissa x; and
$\sum_i K_{Si}$ represents the sum of the $K_{Si}$ due to a singular element (17) in the device downstream of the area under flame in the furnace, a singular element producing, from upstream to downstream and over less than 2 m in the flow direction of the glass, a decrease in the cross section of flow of the glass of more than 10% then an increase in the cross section of flow of the glass of more than 10%, where

$$K_{S_i} = 0.0012 \times \left( \exp\left[ 5.16 \left( \frac{\sigma_i - \sigma_{S_i}}{\sigma_i} \right)^{2.55} \right] - 1 \right) \left( \frac{S_f}{\sigma_i} \right)^2 ,$$

$\sigma_i$ representing the area of the cross section of flow of the glass just upstream of the singular element $S_i$, and $\sigma_{Si}$ representing the area of the minimum cross section of flow produced by the singular element $S_i$.

2. Process according to the preceding claim, **characterized in that** K > 5.5.

3. Process according to the preceding claim, **characterized in that** K > 7.5.

4. Process according to the preceding claim, **characterized in that** K is higher than 9, or even higher than 10.5, or even higher than 13.

5. Process according to one of the preceding claims, **characterized in that** the ratio of the area under flame in the furnace to the area of the conditioning basin is higher than 1.4, and even higher than 1,6, and even higher than 1,8.

6. Process according to one of the preceding claims, **characterized in that** the furnace is sufficiently deep that an upstream recirculation loop (14) and a downstream recirculation loop (15) form in the furnace.

7. Process according to one of the preceding claims, **characterized in that** the conditioning basin comprises, from upstream to downstream, a neck (4) then a working end (5).

8. Process according to one of the preceding claims, **characterized in that** the furnace has a capacity of 500 to 1500 m$^3$ of glass and more particularly 700 to 1400 m$^3$ of glass.

9. Process according to one of the preceding claims, **characterized in that** its pull is 400 to 1300 tonnes of glass per day.

10. Process according to one of the preceding claims, **characterized in that** the cross-fired burners (7) use an oxidant comprising 10 to 30 vol% $O_2$, are equipped with regenerators and function pairwise in reversal mode.

11. Process according to one of the preceding claims, **characterized in that** the cross-fired burners use an oxidant containing 80 to 100 vol% $O_2$.

12. Process according to one of the preceding claims, **characterized in that** in the conditioning basin in any vertical plane transverse to the longitudinal axis of the furnace, there are points in the glass having a longitudinal velocity component pointing from downstream to upstream.

13. Process according to one of the preceding claims, **characterized in that** after the conditioning basin, the glass passes into a channel (6) itself supplying a forming device, no backflow occurring in the channel.

14. Process according to the preceding claim, **characterized in that** the length of the channel is comprised in the range extending from 0.3 to 10 m and especially in the range extending from 0.8 to 6 m.

15. Process for manufacturing flat glass comprising manufacturing molten glass with the process of one of the preceding claims, said molten glass then being formed into flat glass by floating the glass on a molten metal bath in a float chamber.

16. Device for manufacturing molten glass comprising from upstream to downstream a furnace (1) for melting and fining glass equipped with cross-fired overhead burners (7), then a conditioning basin comprising one or more compartments (4,5), said furnace comprising a melting zone (2) and a fining zone (3), the bottom of the fining zone and the bottom of the conditioning basin being deep enough that a single recirculation loop (15), called the downstream loop, passes through the fining zone and through all the compartments of the conditioning basin (4,5), said conditioning basin being supplied with glass by the furnace, the dimensions of the manufacturing device being such that K is higher than 3.5, where

$$K = K_a + \sum_i K_{S_i}$$

in which

$$K = 0.000727 \times S_f \times \int_{x_0}^{x_1} \frac{[P(x)]^2}{[\sigma(x)]^3} \, dx$$

in which

$S_f$ represents the area under flame in the furnace; $x_0$ is the abscissa in the general flow direction of the glass of the end of the area under flame (10) in the furnace;
$x_1$ is the abscissa in the general flow direction of the glass of the end of the conditioning basin;
$\sigma(x)$ represents the area of the cross section of flow of the glass of the device at the abscissa x;

**20**

P(x) represents the perimeter of the cross section of flow of the glass of the device at the abscissa x; and $\Sigma_i K_{Si}$ represents the sum of the $K_{Si}$ due to a singular element (17) in the device downstream of the area under flame in the furnace, a singular element producing, from upstream to downstream and over less than 2 m in the flow direction of the glass, a decrease in the cross section of flow of the glass of more than 10% then an increase in the cross section of flow of the glass of more than 10%, where

$$K_{S_i} = 0.0012 \times \left( \exp\left[ 5.16\left( \frac{\sigma_i - \sigma_{S_i}}{\sigma_i} \right)^{2.55} \right] - 1 \right) \left( \frac{S_f}{\sigma_i} \right)^2 ,$$

$\sigma_i$ representing the area of the cross section of flow of the glass just upstream of the singular element $S_i$, and $\sigma_{Si}$ representing the area of the minimum cross section of flow produced by the singular element $S_i$, said device comprising over its entire length tank blocks containing the molten glass, the glass height being the distance between the upper level (56) of the tank blocks (52,52') decreased by a safety margin (57) comprised between 30 and 130 mm, in particular 80 mm, and the level of the bottom (51).

17. Device according to the preceding claim, **characterized in that** K > 5.5.

18. Device according to the preceding claim, **characterized in that** K > 7.5.

19. Device according to the preceding claim, **characterized in that** K is higher than 9 or even higher than 10.5 or even higher than 13.

20. Device according to one of the preceding device claims, **characterized in that** the ratio of the area under flame (10) in the furnace to the area of the conditioning basin is higher than 1.4, and even higher than 1.6, and even higher than 1.8.

21. Device according to one of the preceding device claims, **characterized in that** the ratio of the area under flame in the furnace to the area of the conditioning basin is lower than 4 and preferably lower than 3.

22. Device according to one of the preceding device claims, **characterized in that** the furnace is deep enough that an upstream recirculation loop (14) and a downstream recirculation loop (15) form in the furnace.

23. Device according to one of the preceding device claims, **characterized in that** the conditioning basin comprises, from upstream to downstream, a neck (4) then a working end (5).

24. Device according to one of the preceding device claims, **characterized in that** the furnace has a capacity of 500 to 1500 m$^3$ of glass and more particularly 700 to 1400 m$^3$ of glass.

25. Device according to one of the preceding device claims, **characterized in that** its pull is 400 to 1300 tonnes of glass per day.

26. Device according to one of the preceding device claims, **characterized in that** the cross-fired burners (7) use an oxidant comprising 10 to 30 vol% $O_2$, are equipped with regenerators and function pairwise in reversal mode.

27. Device according to one of the preceding device claims, **characterized in that** in the conditioning basin in any vertical plane transverse to the longitudinal axis of the furnace, there are points in the glass having a longitudinal velocity component pointing from downstream to upstream.

28. Device according to one of the preceding device claims, **characterized in that** after the conditioning basin, the glass passes into a channel (6) itself supplying a forming device, no backflow occurring in the channel.

29. Device according to the preceding claim, **characterized in that** the length of the channel is comprised in the range extending from 0.3 to 10 m and especially in the range extending from 0.8 to 6 m.

30. Device for manufacturing flat glass comprising the device for manufacturing molten glass of one of the preceding device claims, followed by a float chamber in which the glass is floated on a molten metal bath.

31. Device according to one of claims 16 to 30, **characterized in that** there is a level (55) of the surface of the glass at a distance comprised between 30 and 130 mm under the upper level (56) of the tank blocks (52,52'), such that the K value is higher than 3.5 and preferably higher than 5.5 and even more preferably higher than 7.5, in particular higher than 9, or even higher than 10.5, or even higher than 13.

a)                                    b)

Fig 1

Fig 2

Fig 3

Fig 4

Fig 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 650934 A
- FR 2951156 A
- EP 2168923 A
- FR 2299277
- US 3261677 A
- CN 201250173 Y
- CN 102320721
- EP 650933 A
- EP 616983 A1